Europäisches Patentamt

European Patent Office

Office européen des brevets

(19)

(11) Numéro de publication : **0 296 209 B1**

(12) **FASCICULE DE BREVET EUROPEEN**

(45) Date de publication du fascicule du brevet :
**15.04.92 Bulletin 92/16**

(51) Int. Cl.⁵ : **E21B 47/00,** E21B 23/00,
G01V 1/40

(21) Numéro de dépôt : **88900699.5**

(22) Date de dépôt : **30.12.87**

(86) Numéro de dépôt international :
**PCT/FR87/00524**

(87) Numéro de publication internationale :
**WO 88/05111 14.07.88 Gazette 88/15**

(54) **METHODE ET DISPOSITIF POUR EFFECTUER DES MESURES OU/ET INTERVENTIONS DANS UNE PORTION DE PUITS FORTEMENT INCLINEE ET SON APPLICATION A LA REALISATION DE PROFILS SISMIQUES.**

(30) Priorité : **31.12.86 FR 8618416**

(43) Date de publication de la demande :
**28.12.88 Bulletin 88/52**

(45) Mention de la délivrance du brevet :
**15.04.92 Bulletin 92/16**

(84) Etats contractants désignés :
**DE GB IT NL**

(56) Documents cités :
**EP-A- 0 077 275**
**EP-A- 0 143 192**

(56) Documents cités :
**EP-A- 0 174 648**
**EP-A- 0 198 764**
**FR-A- 2 544 013**
**FR-A- 2 547 861**
**US-A- 4 062 551**
**US-A- 4 457 370**
**US-A- 4 500 155**
**US-A- 4 570 709**

(73) Titulaire : **INSTITUT FRANCAIS DU PETROLE**
**4, Avenue de Bois Préau**
**F-92502 Rueil-Malmaison (FR)**

(72) Inventeur : **WITTRISCH, Christian**
**24, rue George-Sand**
**F-92500 Rueil-Malmaison (FR)**

EP 0 296 209 B1

## Description

La présente invention concerne une méthode et un dispositif pour effectuer dans des portions de puits déviés, fortement inclinées sur la verticale, ou horizontales, des opérations telles que des mesures ou/et interventions à l'aide d'instruments spécialisés.

L'invention est notamment applicable lorsqu'il s'agit d'effectuer des mesures et/ou interventions avec un ensemble d'un ou de plusieurs instruments qui doivent être isolés de la colonne de forage qui a permis à l'ensemble d'être placé dans la portion de puits. De telles situations peuvent se rencontrer lorsque l'on désire réaliser des profils sismiques.

La présente invention permet notamment de réaliser des profils sismiques par déplacement horizontal ou fortement incliné par rapport à la verticale de l'ensemble d'instruments. De tels profils seront par la suite nommés "profils sismiques horizontaux (PSH)".

Les mesures effectuées peuvent par exemple comprendre l'enregistrement des vibrations transmises à travers les formations géologiques jusqu'à l'ensemble d'instruments. Le traitement de ces informations permet de réaliser le profil sismique des couches de terrain situées de part et d'autre d'un drain ou forage horizontal ou ayant une grande extension déviée, ce traitement pouvant aboutir à la connaissance de la forme du toit d'une formation géologique.

Les mesures effectuées pourront également comporter l'enregistrement de la pression et de la température de fond, la mesure (focalisée ou non) de la résistivité électrique des formations, etc.

Ces mesures pourront être complétées par la visualisation des parois du puits par caméra de télévision, par exemple.

On a déjà proposé dans les brevets US-4.457.370 et US-4.570.709 une méthode et un dispositif permettant d'effectuer à l'aide d'un outil spécialisé muni d'une connexion électrique des mesures dans une portion de puits fortement inclinée par rapport à la verticale ou horizontale. Cependant, la méthode et le dispositif ne permettent pas des opérations nécessitant un isolement, tel un découplage mécanique, de l'ensemble d'instruments par rapport à la colonne.

Il en est de même pour la technique selon le brevet français FR-2.547.861 qui montre de plus l'inconvénient de réduire le diamètre extérieur des instruments.

On a aussi déjà proposé dans le brevet français FR-2.544.013 un dispositif et une méthode permettant d'effectuer des mesures ou/et interventions dans un puits, dans une zone de ce puits soumise à une compression hydraulique. Cette invention ne permet pas d'effectuer avec facilité, en différents points du puits assez espacés, une série de mesures et/ou interventions. Une telle méthode et un tel dispositif s'appliquent notamment à l'écoute en un point d'une zone de puits soumise à une compression hydraulique, mais ils ne sont pas adaptés à réaliser des mesures de profils sismiques.

Par ailleurs, le carter de protection de l'ensemble d'instruments impose une réduction du diamètre de cet ensemble.

L'invention fournit un dispositif permettant d'effectuer des mesures ou/et interventions dans une portion de puits à l'aide d'un ensemble d'instruments de mesure ou/et intervention placé à l'extrémité inférieure d'une colonne, comportant des moyens coopérant avec ladite extrémité et ledit ensemble, ces moyens comportant une portée, une base pouvant coulisser suivant une course délimitée par une butée basse et une position de verrouillage ladite base dans le tubage et un câble de liaison entre ladite base et ledit ensemble, ces moyens étant adaptés à maintenir ledit ensemble dans le prolongement de ladite extrémité lorsque ledit ensemble est dans une position engagée et adaptés à être inopérants lorsque ledit ensemble est dans une position dégagée, ledit ensemble comportant des moyens d'ancrage à la paroi du puits, tels des bras. Le dispositif se caractérise en ce que ledit ensemble est dans une position engagée lorsque la base est verrouillée dans le tubage, en ce que dans ladite position engagée ladite portée est adaptée à résister aux efforts agissants sur la sonde et à maintenir ledit ensemble dans le prolongement de ladite extrémité, les efforts étant dans le sens opposé de la progression de la colonne dans le puits et en ce que ledit ensemble est adapté à être ancré à la paroi du puits dans ladite position engagée.

Un câble dudit dispositif peut être connecté sur ladite base par des moyens de connexion et ledit ensemble peut être relié à la surface par la coopération dudit câble, de ladite base et dudit câble de liaison.

Le dispositif peut comporter un raccord spécial muni d'une ouverture latérale traversée par ledit câble reliant la base à la surface.

Les moyens de verrouillage peuvent être effaçables par télécommande depuis la surface par l'intermédiaire dudit câble.

Ledit ensemble d'instruments de mesure ou/et d'intervention peut être relié électriquement à la surface par la coopération des moyens de connexion assurant au moins une continuité électrique entre un ou plusieurs conducteurs électriques contenus dans le câble et le câble de liaison.

Lesdits moyens coopérant avec ladite extrémité inférieure de la colonne et ledit ensemble peuvent comporter un carter de protection au moins latérale et ledit carter de protection peut comporter des ouvertures à travers lesquelles lesdits moyens d'ancrage peuvent opérer pendant tout le temps nécessaire pour passer de ladite position engagée à ladite position dégagée. Dans ce cas, lesdits moyens coopérant avec ladite extrémité inférieure de la colonne et ledit ensemble peuvent comporter un système d'indexation en rotation dudit ensemble par rapport audit carter.

L'invention fournit aussi une méthode pour effectuer des mesures ou/et interventions dans une portion de puits fortement inclinée par rapport à la verticale ou horizontale à l'aide du dispositif décrit précédemment, placé à l'extrémité d'une colonne tubulaire rigide en compression longitudinale. La méthode réalise les étapes suivantes :

– on positionne ledit ensemble dans une première position correspondant à ladite position engagée,

– on introduit dans le puits ledit ensemble et ladite partie inférieure de ladite colonne,

– on fait progresser ledit ensemble dans le puits jusqu'à ce que ledit ensemble atteigne sensiblement une position désirée,

– on libère et on dégage ledit ensemble de sa position engagée,

– on l'amène dans une deuxième position écartée de la première dans laquelle ledit ensemble repose sur une paroi du puits et dans laquelle ledit ensemble est mécaniquement découplé de ladite colonne,

– on déplace en avant ou/et arrière ladite colonne de façon que ledit ensemble atteigne ladite deuxième position, et

– on effectue la mesure ou/et intervention.

On peut amener dans la deuxième position en mettant en action lesdits moyens d'ancrage de telle manière que ledit ensemble soit maintenu dans le puits.

La méthode peut comporter les étapes intermédiaires et successives suivantes :

– on introduit dans la colonne une prise complémentaire (15) auxdits moyens de connexion, ladite prise étant fixée à l'extrémité d'un câble de transmission,

– on déplace la prise dans la colonne jusqu'à obtenir son raccordement par les moyens de connexion sur ladite base reliée audit ensemble par le câble de liaison,

– on efface les moyens de verrouillage de la base dans la colonne par télécommande à partir de la surface, et

– on dégage ledit ensemble de sa position engagée.

Dans la méthode, on peut contrôler, au cours de la phase d'amenée de l'ensemble dans ladite deuxième position, la position dudit ensemble relativement à ladite portée.

Pour effectuer des mesures ou interventions en plusieurs postes, la méthode peut comporter les étapes suivantes :

– on introduit ladite prise et ledit câble de transmission dans la colonne à travers un raccord spécial muni d'une ouverture latérale,

– on fixe ce raccord à l'extrémité supérieure de la colonne,

– on fait progresser l'ensemble dans le puits en rajoutant des éléments tubulaires au-dessus dudit raccord sur une longueur telle que ledit raccord reste dans une partie verticale ou de faible inclinaison du puits,

– on libère et on dégage ledit ensemble de sa position engagée puis on l'amène dans une deuxième position dans laquelle celui-ci repose sur la paroi du puits où il est mécaniquement découplé de ladite colonne,

– on effectue les mesures ou/et interventions,

– on déplace l'ensemble en remontant la colonne puis on redescend légèrement le tubage pour assurer le découplage mécanique, puis

– on reprend autant de fois que nécessaire les deux étapes précédentes.

On peut déclencher le fonctionnement dudit ensemble pendant la remontée de ladite colonne.

Une fois les mesures ou/et interventions effectuées à un ou plusieurs postes, on peut ramener ledit ensemble dans ladite position engagée relativement à ladite colonne.

L'invention permet également d'effectuer des profils sismiques dans une portion de puits fortement inclinée par rapport à la verticale, ou horizontale, dans laquelle on utilise au moins une source sismique placée en surface et un ensemble d'instruments adapté à mesurer des vibrations sismiques. On peut mettre en oeuvre la méthode précédente dans ladite portion de puits alors que ladite source est en action.

Dans ce cas, on peut déplacer ladite source sismique et ledit ensemble adapté à mesurer lesdites vibrations sismiques, ladite source et ledit ensemble étant placés sensiblement au droit l'un de l'autre.

Un exemple de réalisation de l'invention est illustré par les dessins annexés où :

– la figure 1 est une vue en détail d'un exemple de réalisation du dispositif selon l'invention,

– les figures 2 à 5 illustrent les différentes phases de la mise en oeuvre du système selon l'invention, appliqué à des opérations de mesures sismiques :

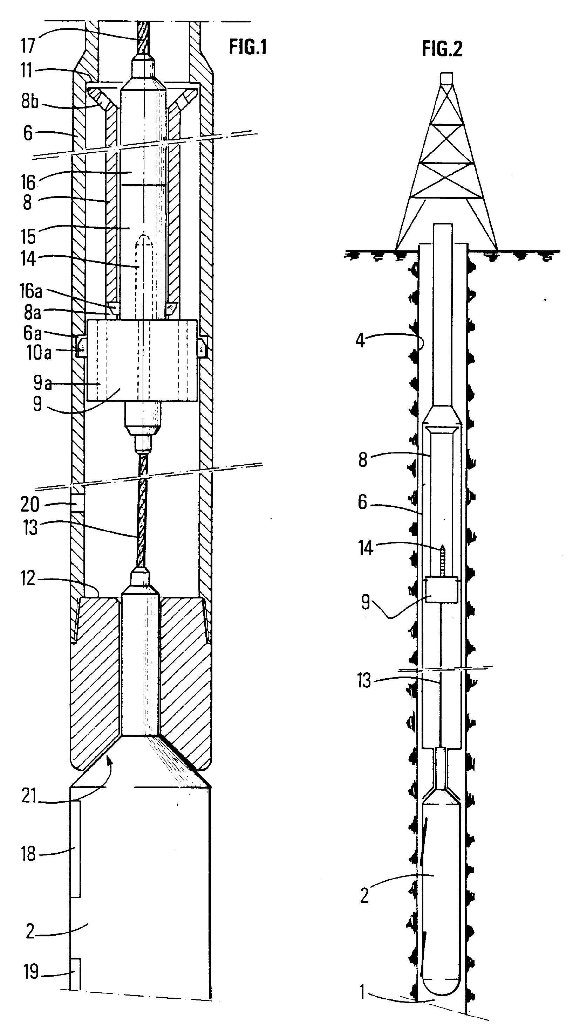

. la figure 2 schématise la phase de mise en place dans le puits du dispositif selon l'invention,

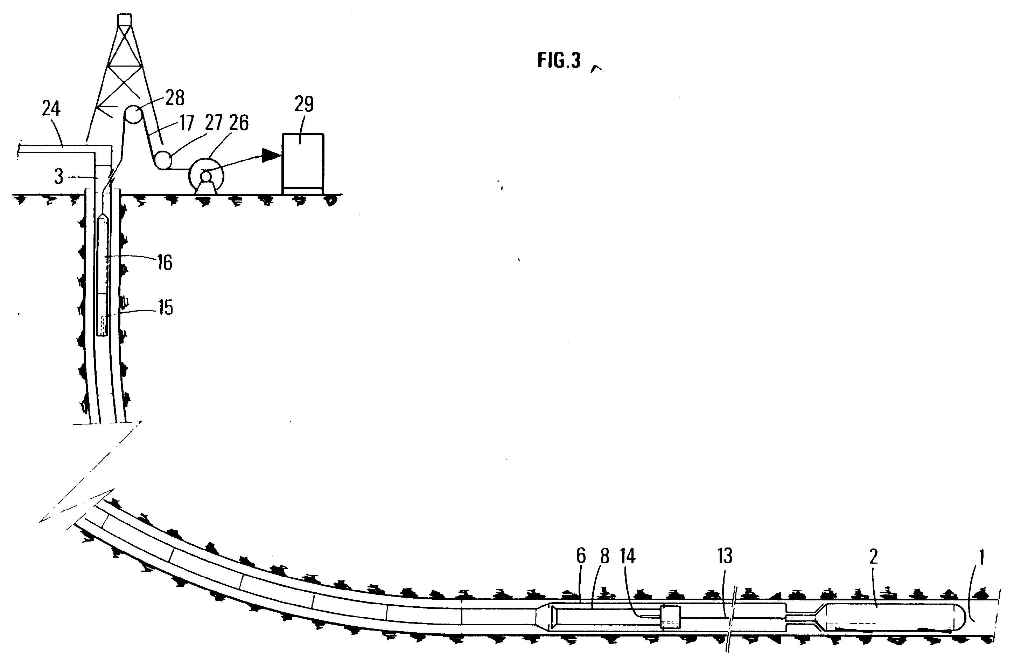

. la figure 3 schématise la phase de connexion du dispositif à la surface,

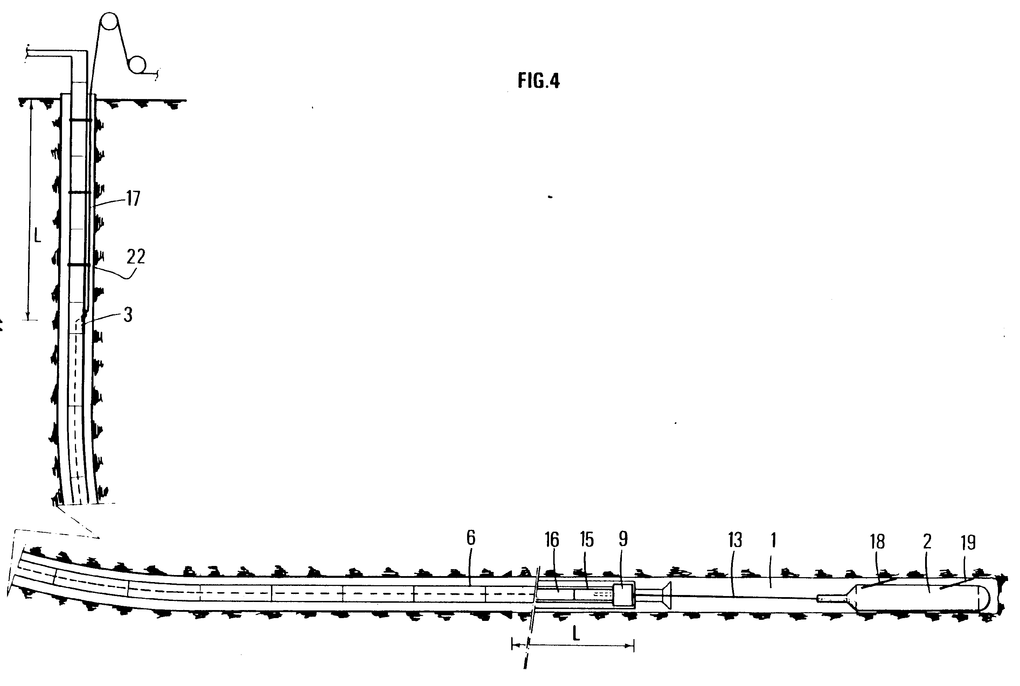

. la figure 4 schématise la phase d'écartement de l'ensemble d'instruments et de l'extrémité du tubage dans une portion de puits fortement inclinée par rapport à la verticale, ou horizontale, et

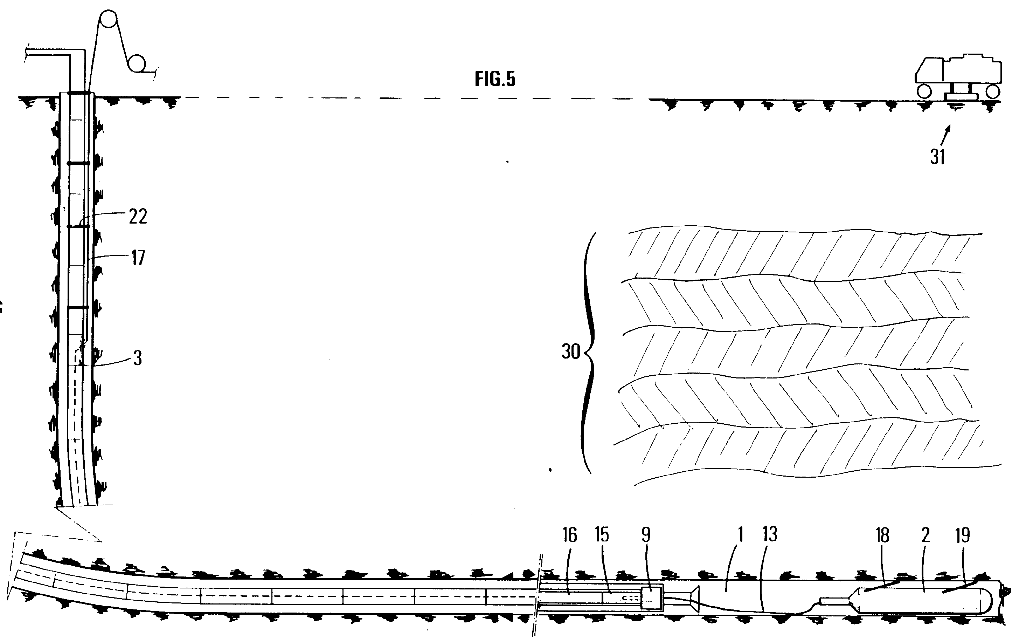

. la figure 5 schématise un poste de travail au cours de la phase de mesures.

La figure 1 détaille un exemple de réalisation du dispositif selon l'invention, dans une phase d'utilisation où celui-ci est connecté à la surface par un câble de transmission 17 et dans laquelle la sonde 2 ou ensemble d'un ou de plusieurs instruments n'est pas encore isolée de l'extrémité inférieure du tubage 6.

L'extrémité supérieure de la sonde 2 coopère avec une portée 21 de l'extrémité inférieure du tubage 6 de manière que la sonde 2 soit disposée dans le prolongement du tubage 6. L'extrémité de la sonde 2 et la portée 21 sont adaptées à résister aux efforts agissant sur la sonde, notamment au cours d'une progression forcée de celle-ci dans certains tronçons de puits difficiles, tels les tronçons courbés ou au moins partiellement obturés.

Le côté de la portée situé vers l'extérieur du tubage est évasé, notamment pour faciliter le centrage à distance de la sonde. La sonde est maintenue en place sur la portée 21 au moyen d'un câble de liaison 13 fixé à l'extrémité supérieure de la sonde 2, ce câble traversant la portée 21 et étant maintenu tendu ou sensiblement tendu pour augmenter la qualité du guidage de la sonde sur la portée, au moyen d'une base 9 rendue à cet effet solidaire du tubage 6 par des moyens de verrouillage 6a, 10a.

Ces moyens de verrouillage peuvent être, mais non exclusivement, comme représenté, du type électrique et comportent des chiens 10a solidaires de la base 9 et commandés à distance par le câble de transmission 17, ainsi qu'une gorge annulaire 6a réalisée dans le tubage 6, ladite gorge coopérant avec lesdits chiens pour assurer un verrouillage sans indexation en rotation de la base sur le tubage.

L'indexation suivant l'axe du tubage est assurée par la coopération de l'extrémité supérieure du guide de centrage 8 avec la butée supérieure 11 correspondant à un épaulement dans le tubage 6.

Le câble 13 comporte des lignes électriques assurant le passage des informations, (signaux de commande et/ou de mesure), des courants de puissance, etc, entre la sonde et la connexion électrique 15 solidaire de la base. Le câble de liaison 13 est flexible et souple (c'est-à-dire de raideur négligeable), de manière à pouvoir assurer un découplage mécanique entre la sonde 2 et le tubage 6.

La base 9 est surmontée d'un guide de centrage 8 évasé à sa partie supérieure pour permettre le centrage de la barre de charge 16, en vue de son amarrage et de sa connexion à la base. La barre de charge ou de lestage 16 qui est fixée à l'extrémité inférieure du câble de transmission 17 est adaptée par son poids et ses moyens hydrauliques à être déplacée depuis la surface dans le tubage 6 par gravité ou/et pompage hydraulique.

La barre 16 comporte une connexion électrique 15 qui est une prise femelle adaptée à coopérer avec la fiche mâle multicontact 14 solidaire de la base 9, et comporte des moyens d'ancrage de la barre de charge à la base empêchant leur séparation.

Des exemples de connecteurs électriques utilisables pour constituer l'ensemble de la fiche mâle 14 et de la prise femelle 15 sont décrits dans le brevet US-4.500.155.

Les moyens d'ancrage représentés sont du type électrique et commandés à distance depuis la surface. Ces moyens, qui sont effaçables, comportent un organe moteur 16a (de préférence solidaire de la barre de charge 16 pour être commandé le plus directement et simplement possible à distance) coopérant avec un organe récepteur 8a solidaire de la base ou support de câble 9.

Les chiens électriques ou électro-hydrauliques 16a constituent l'organe moteur alors que la rainure 8a constitue l'organe récepteur.

Les moyens d'ancrage, qui pourraient être mécaniques, peuvent comporter des rondelles cisaillables entourant la prise 15 ou la barre de charge 16 et coopérant avec des griffes solidaires du tube 8 ou de la base 9.

L'extrémité supérieure évasée du guide de centrage 8, comme la base 9 ou l'extrémité inférieure du tubage 6, comporte des orifices 8b, 9a, 20 respectivement, permettant la circulation de fluide à travers le tubage 6 notamment pour le déplacement du connecteur 16 à travers le tubage.

La course de la base 9, qui permet de plus ou moins éloigner du tubage 6 la sonde 2, est définie au moyen de deux épaulements pratiqués dans le tubage définissant une butée haute 11 et une butée basse 12, le point d'amarrage du câble de liaison 13 sur la base 9 ayant une forme adaptée pour pénétrer au travers de la portée 21 lorsque la base 9 entre en contact avec la butée basse 12.

La sonde 2 pourra comporter des bras d'ancrage 18, 19 repliés le long de son corps lors de la descente de celle-ci dans le puits, et déployés hydrauliquement par télécommande électrique depuis la surface, par l'intermédiaire des câbles 13 et 17. Ces bras sont ancrés dans la paroi du puits en pressant la sonde contre cette paroi du côté diamétralement opposé en vue d'y effectuer les mesures ou opérations. Ces bras pourront être reliés à un ou plusieurs patins s'appliquant contre la paroi du puits.

Dans l'exemple d'application où la sonde 2 est utilisée pour détecter et enregistrer des vibrations sismiques longitudinales ou tranversales ayant été refractées, réfléchies, diffractées... par les formations géologiques, cette sonde pourra notamment comporter des géophones, des hydrophones ou des accéléromètres dynamiques ou hydrophones adaptés à enregistrer les ondes sismiques.

Cette sonde pourra en outre comporter des capteurs de pression de fluide, température, pression d'application des bras contre la paroi, des capteurs de mesure de l'orientation de la sonde avec des accéléromètres ou des magnétomètres, des pendules, des boussoles, des électrodes de mesure électrique ou tout autre capteur ou instrument utilisé lors d'un forage notamment pour réaliser une diagraphie.

La mise en oeuvre de ce dispositif est indiqué cidessous, en se référant aux figures 2 à 5 qui montrent les étapes successives de cette technique. La figure 2 illustre la première étape dans laquelle on positionne dans son prolongement à l'extrémité inférieure de la colonne ou du tubage 6, la sonde ou l'ensemble d'instruments 2 que l'on maintient en place avec le câble de liaison 13, lui-même soutenu par la base 9, elle-même solidarisée du tubage 6 par les moyens de verrouillage 10a-6a.

Le dispositif ainsi obtenu est mis en place dans le puits vertical dont une partie peut être pourvue d'un cuvelage 4, puis descendu en ajoutant des éléments tubulaire à la colonne jusqu'à ce que celle-ci atteigne sensiblement le lieu où sera effectué la dernière mesure ou/et intervention. Les opérations d'après la méthode selon l'invention sont normalement effectuées en remontant le dispositif dans le puits.

Dans cette position, à l'extrémité supérieure du tubage, on introduit la barre de charge 16 reliée au câble de transmission 17 et on met en place un raccord spécial à fenêtre latérale 3 dénommé généralement "Side Entry Sub" à travers l'ouverture duquel passe le câble 17.

Ce raccord 3 peut être de tout type connu et en particulier du type de celui décrit dans le brevet US-4.062.551.

Le raccord spécial 3 étant fixé à la colonne, est recouvert d'une tête d'injection 24. La circulation du fluide pour le déplacement de la barre de charge 16 vers la base 9 est assurée au travers de la tête d'injection 24 alors que le câble 17 se déroule du treuil 26, sur les poulies de renvois 27, 28 et à travers le raccord spécial 3. (Fig. 3).

Arrivé en contact avec la base 9 et coopérant avec la fiche mâle 14, la barre de charge 16 comportant la prise femelle 15 est ancrée dans le guide de centrage 8, au moyen des chiens électriques 16a commandés depuis la surface et coopérant avec la rainure 8a ménagée dans le guide de centrage 8 solidaire de la base 9.

Le raccordement étant effectué, la tête d'injection 3 est enlevée et des éléments rigides de conduite sont assemblés à l'extrémité supérieure de la colonne 6, de manière à assurer la progression de l'extrémité inférieure du tubage où se trouve la sonde 2 jusqu'à ce que celle-ci ait atteint sensiblement l'emplacement de sa première mesure ou/et intervention.

Comme le câble 17 se trouve entre la surface et le raccord spécial 3 à l'extérieur du tubage 6, des centreurs 22 ou protecteurs de câbles en caoutchouc fixés à la colonne rigide assurent le guidage du câble sur une certaine longueur. Ces centreurs peuvent être de tout type connu et en particulier du type de ceux commercialisés par la société WEATHERFORD-STABILIA sous la dénomination de "Control line".

La distance L séparant les emplacements où sont effectuées la première et la deuxième mesures ou interventions est sensiblement égale à la distance L comprise entre le raccord spécial et l'extrémité supérieure du tubage lorsque l'extrémité inférieure de celui-ci est sensiblement au niveau de la première des mesures.

La sonde 2 étant dans la position de la première mesure ou/et intervention, on effectue sa séparation de l'extrémité du tubage 6. Cette séparation n'est possible qu'après libération des moyens de verrouillage 6a-10a depuis la surface. La sonde 2 est ensuite dégagée du tubage par un pompage de fluide (la tête d'injection étant remise en place) avec le risque de coincer le câble de liaison 13 si la sonde 2 venait à ne pas assez s'éloigner du tubage 6, et/ou en ancrant les bras 18 et 19 de la sonde à a paroi du puits 1 tout en remontant le tubage pour amener la base 9 contre la butée basse du tubage 12.

L'association du pompage en retenant la base 9 par le câble 17 et de la remontée du tubage 6 après ancrage de la sonde 2 sur la paroi du puits montre qu'il est plus facile d'écarter la sonde du tubage par ces moyens combinés que par un ancrage de sonde et une remontée de tubage seuls, ou par un pompage seul.

En continuant de remonter le tubage associé éventuellement à un pompage, on assure la mise en tension du câble de liaison ou sensiblement, quitte à déplacer la sonde ancrée (Fig. 4) avant de redescendre le tubage, par exemple de 0,5 m, de manière à découpler mécaniquement ou isoler du tubage la sonde (Fig. 5) et soustraire ainsi la sonde ou l'ensemble d'instruments aux vibrations du tubage.

Avec cet agencement, et dans cette position de première mesure ou de première station de mesure, la sonde peut être mise en service et les signaux de mesure provenant de la sonde comme le courant électrique l'alimentantt, sont transmis de et à la station de surface 29 par l'intermédiaire des conducteurs incorporés aux câbles 13 et 17. La liaison électrique entre ces conducteurs et la station 29 étant réalisée de façon connue par un ensemble de balais frottant sur des bagues collectrices solidaires de l'arbre du treuil 26.

Une fois les mesures ou/et interventions effectuées à la première station, on désancre les bras de la sonde, puis on remonte le tubage en tirant la sonde jusqu'à la deuxième station de mesure ou/et d'intervention, par exemple 5 ou 10 mètres plus près de la surface, on ancre à nouveau la sonde 2 et enfin on redescend légèrement le tubage 6, de manière à renouveler le découplage entre la sonde et le tubage. A l'extrémité supérieure du tubage, des éléments de conduite sont enlevés et le câble enroulé sur le treuil 26.

La procédure est recommencée à chaque station, jusqu'à ce que le raccord spécial 3 soit sensiblement au niveau de la surface. Après avoir fermé les bras de la sonde, on exerce alors éventuellement une traction sur le câble de transmission 17 pour replacer la sonde à l'extrémité du tubage, puis lorsque la base 9, par l'intermédiaire du guide de centrage 8, arrive en butée contre l'épaulement 11, on met en oeuvre les moyens de verrouillages 6a, 10a. Les moyens d'ancrage 16a, 8a de la barre de charge 16 au guide 8 sont alors libérés.

On remonte alors la barre de charge par le treuil et on démonte le raccord spécial 3. On relève enfin la sonde 2 et le tubage 6 de la même manière qu'ils avaient été descendus.

Pour cette méthode, on peut effectuer des séries de mesures ou interventions dans des zones de puits horizontales, fortement inclinées (par rapport à la verticale), voire verticales.

La méthode décrite permet de réaliser des profils sismiques particulièrement intéressants lorsque le puits est horizontal ou très dévié et que l'on désire reconnaître précisément et dans des zones qui seraient autrement difficiles à explorer par sondage, des formations géologiques, telles le toit d'un réservoir 30 ou des couches situées de part et d'autre de la portion horizontale ou fortement inclinée du puits.

Pour effectuer ces profils sismiques par déplacement horizontal, ou profils sismiques horizontaux, on utilise une source sismique 31 placée à la surface du sol, telle un camion vibreur, que l'on dispose sensiblement au droit ou à la verticale de la sonde alors qu'elle se trouve à une station de mesure. La source sismique est mise en action et les vibrations enregistrées au niveau de la sonde.

Après remontée du tubage 6, la sonde 2 est ensuite disposée sur une nouvelle station et la source 31 redisposée au-dessus et ainsi de suite sur toute la longueur possible de mesure du puits.

Lorsque l'accès du terrain (montagne, marais, zone habitée..) ne permet pas à la source sismique de se produire en tout lieu, la sonde peut effectuer plusieurs stations de mesures pour une même implantation de la source. Et inversement, il peut être intéressant pour une ou plusieurs stations données d'effectuer plusieurs mesures avec à chaque fois des implantations différentes de la source sismique 31.

Le dispositif pourra comporter un carter protecteur placé autour de la sonde. Celui-ci pourra comporter des ouvertures permettant aux bras de la sonde d'y passer de manière qu'ils puissent s'ancrer à la paroi du puits. Un système d'indexation en rotation de la sonde par rapport au carter pourra être adjoint au dispositif.

Pour permettre la propagation du tubage dans les puits fortement déviés ou horizontaux, celui-ci est rigide en compression longitudinal, de manière notamment à pouvoir vaincre les frottements de courbures dans les puits et pousser sur la sonde.

**Revendications**

1. Dispositif permettant d'effectuer des mesures ou/et interventions dans une portion de puits (1) à l'aide d'un ensemble d'instruments (2) de mesure ou/et intervention placé à l'extrémité inférieure d'une colonne (6), comportant des moyens coopérant avec ladite extrémité et ledit ensemble, ces moyens comportant une portée (21), une base (9) pouvant coulisser suivant une course délimitée par une butée basse (12) et une position de verrouillage (6a, 10a) de ladite base dans le tubage (6) et un câble de liaison (13) entre ladite base et ledit ensemble, ces moyens étant adaptés à maintenir ledit ensemble dans le prolongement de ladite extrémité (6) lorsque ledit ensemble est dans une position engagée et adaptés à être inopérants lorsque ledit ensemble est dans une position dégagée, ledit ensemble comportant des moyens d'ancrage (18, 19) à la paroi du puits, tels des bras, caractérisé en ce que ledit ensemble est dans une position engagée lorsque la base (9) est verrouillée dans le tubage (6), en ce que dans ladite position engagée ladite portée est adaptée à résister aux efforts agissants sur la sonde et à maintenir ledit ensemble dans le prolongement de ladite extrémité, les efforts étant dans le sens opposé de la progression de la colonne dans le puits et en ce que ledit ensemble est adapté à être ancré à la paroi du puits dans ladite position engagée.

2. Dispositif selon la revendication 1, caractérisé en ce que un câble (17) est connecté sur ladite base par des moyens de connexion (14, 15) et en ce que ledit ensemble est relié à la surface par la coopération dudit câble (17), de ladite base (9) et dudit câble de liaison (13).

3. Dispositif selon l'une des revendications précédentes, caractérisé en ce qu'il comporte un raccord spécial (3) muni d'une ouverture latérale traversée par ledit câble (17) reliant la base à la surface.

4. Dispositif selon l'une des revendications précédentes, caractérisé en ce que les moyens de verrouillage (6a, 10a) sont effaçables par télécommande depuis la surface par l'intermédiaire dudit câble (17).

5. Dispositif selon l'une des revendications précédentes, caractérisé en ce que ledit ensemble d'instruments (2) de mesure ou/et d'intervention est relié électriquement à la surface par la coopération des moyens de connexion (14, 15) assurant au moins une continuité électrique entre un ou plusieurs conducteurs électriques contenus dans le câble (17) et le câble de liaison (13).

6. Dispositif selon l'une des revendications précédentes, caractérisé en ce que lesdits moyens coopérant avec ladite extrémité inférieure de la colonne (6) et ledit ensemble (2) comportent un carter de protection au moins latérale et en ce que ledit carter de protection comporte des ouvertures à travers lesquelles lesdits moyens d'ancrage peuvent opérer pendant tout le temps nécessaire pour passer de ladite position engagée à ladite position dégagée.

7. Dispositif selon la revendication 6, caractérisé en ce que lesdits moyens coopérant avec ladite extrémité inférieure de la colonne (6) et ledit ensemble (2) comportent un système d'indexation en rotation dudit ensemble par rapport audit carter.

8. Méthode pour effectuer des mesures ou/et interventions dans une portion de puits fortement inclinée par rapport à la verticale ou horizontale à l'aide du dispositif selon l'une des revendications 1 à 7, placé à l'extrémité d'une colonne tubulaire (6) rigide en compression longitudinale, comprenant les étapes suivantes:

– on positionne ledit ensemble (2) dans une première position correspondant à ladite position engagée,

– on introduit dans le puits (1) ledit ensemble (2) et ladite partie inférieure de ladite colonne,

– on fait progresser ledit ensemble dans le puits jusqu'à ce que ledit ensemble atteigne sensiblement une position désirée,

– on libère et on dégage ledit ensemble de sa position engagée,

– on l'amène dans une deuxième position écartée de la première dans laquelle ledit ensemble repose sur une paroi du puits et dans laquelle ledit ensemble est mécaniquement découplé de ladite colonne,

– on déplace en avant ou/et arrière ladite colonne de façon que ledit ensemble atteigne ladite deuxième position, et

– on effectue la mesure ou/et intervention.

9. Méthode selon la revendication 8, caractérisée en ce qu'on l'amène dans la deuxième position tout en mettant en action lesdits moyens d'ancrage de telle manière que ledit ensemble soit maintenu dans le puits (1).

10. Méthode selon l'une des revendications 8 et 9, caractérisée en ce qu'elle comporte les étapes intermédiaires et successives suivantes:

– on introduit dans la colonne (6) une prise complémentaire (15) auxdits moyens de connexion (14), ladite prise étant fixée à l'extrémité d'un câble de transmission (17),

– on déplace la prise (15) dans la colonne jusqu'à obtenir son raccordement par les moyens de connexion sur ladite base reliée audit ensemble par le câble de liaison (13),

– on efface les moyens de verrouillage (6a, 10a) de la base dans la colonne (6) par télécommande à partir de la surface, et

– on dégage ledit ensemble de sa position engagée.

11. Méthode selon l'une des revendications 8 à 10, caractérisée en ce que l'on contrôle, au cours de la phase d'amenée de l'ensemble dans ladite deuxième position, la position dudit ensemble relativement à ladite portée.

12. Méthode selon la revendication 10 pour effectuer des mesures ou interventions en plusieurs postes, caractérisée en ce qu'elle comporte les étapes suivantes :

– on introduit ladite prise (15) et ledit câble de transmission (17) dans la colonne à travers un raccord spécial (3) muni d'une ouverture latérale,

– on fixe ce raccord à l'extrémité supérieure de la colonne (6),

– on fait progresser l'ensemble dans le puits en rajoutant des éléments tubulaires au-dessus dudit raccord sur une longueur telle que ledit raccord reste dans une partie verticale ou de faible inclinaison du puits,

– on libère et on dégage ledit ensemble de sa position engagée puis on l'amène dans une deuxième position dans laquelle celui-ci repose sur la paroi du puits où il est mécaniquement découplé de ladite colonne,

– on effectue les mesures ou/et interventions,

– on déplace l'ensemble en remontant la colonne puis on redescend légèrement le tubage pour assurer le découplage mécanique, puis

– on reprend autant de fois que nécessaire les deux étapes précédentes.

13. Méthode selon l'une des revendications 8 à 12, dans laquelle on remonte ladite colonne, caractérisée en ce que l'on déclenche le fonctionnement dudit ensemble pendant la remontée de ladite colonne.

14. Méthode selon l'une des revendications 8 à 13, caractérisée en ce qu'une fois les mesures ou/et interventions effectuées à un ou plusieurs postes, on ramène ledit ensemble dans ladite position engagée relativement à ladite colonne.

15. Méthode pour effectuer des profils sismiques dans une portion de puits fortement inclinée par rapport à la verticale, ou horizontale, dans laquelle on utilise au moins une source sismique (31) placée en surface et un ensemble d'instruments (2) adapté à mesurer des vibrations sismiques, caractérisée en ce que l'on met en oeuvre la méthode selon l'une des revendications 8 à 14 dans ladite portion de puits alors que ladite source est en action.

16. Méthode selon la revendication 15, caractérisée en ce que l'on déplace ladite source sismique et ledit ensemble adapté à mesurer lesdites vibrations sismiques, ladite source (31) et ledit ensemble (2) étant placés sensiblement au droit l'un de l'autre.

**Patentansprüche**

1. Vorrichtung, die es gestattet, Messungen und-/oder Eingriffsvorgänge in einem Teil eines Bohrlochs (1) mit Hilfe einer Instrumenten- und Eingriffsanordnung (2) vorzunehmen, die am unteren Ende einer Kolonne (6) angeordnet ist, umfassend: Mittel, die mit diesem Ende und dieser Anordnung zusammenwirken, wobei diese Mittel ein Auflager (21) umfassen, ein Basisteil (9) entsprechend einem durch einen unteren Anschlag (12) begrenzten Weg und einer Verriegelungsstellung (6a, 10a) dieses Basisteils in der Verrohrung (6) gleiten kann, und ein Verbindungskabel (13) zwischen diesem Basisteil und dieser Anordnung vorgesehen ist, wobei diese Mittel so ausgelegt sind, daß sie die Anordnung in der Verlängerung dieses Endes (6) halten, wenn diese Anordnung sich in einer Eingriffsstellung befindet und die so ausgelegt sind, daß sie wirkungslos werden, wenn diese Anordnung sich in einer Freigabestellung befindet, wobei die Anordnung Mittel zur Verankerung (18, 19) gegen die Bohrlochwandung wie Arme umfaßt, dadurch gekennzeichnet, daß diese Anordnung sich in einer Eingriffsstellung befindet, wenn das Basisteil (9) in der Verrohrung (6) verriegelt ist, daß in dieser Eingriffsstellung dieses Auflager bzw. diese Auflagerfläche so ausgebildet ist, daß sie die auf die Sonde auswirkenden Kräfte aushalten kann und diese Anordnung in der Verlängerung dieses Endes halten kann, wobei die Kräfte in Richtung entgegengesetzt zur Progressionsrichtung der Kolonne im Bohrloch sind und daß die Anordnung ausgelegt ist, um gegen die Wandung des Bohrlochs in dieser Eingriffsstellung verankert zu werden.

2. Vorrichtung nach Anspruch 1, dadurch gekennzeichnet, daß ein Kabel (17) mit dem Basisteil durch Verbindungsmittel (14, 15) verbunden ist und daß diese Anordnung mit der Oberfläche durch das Zusammenwirken dieses Kabels (17), dieses Basisteils (9) und dieses Verbindungskabels (13) verbunden ist.

3. Vorrichtung nach einem der vorhergehenden Ansprüche, dadurch gekennzeichnet, daß sie ein Spezialverbindungsstück (3) umfaßt, das mit einer seitlichen Öffnung versehen ist, welche von diesem das Basisteil mit der Oberfläche verbindenden Kabel (17) durchsetzt ist.

4. Vorrichtung nach einem der vorhergehenden Ansprüche, dadurch gekennzeichnet, daß die Verriegelungsmittel (6a, 10a) durch Fernbedienung von der Oberfläche aus vermittels dieses Kabels (17) eindrückbar sind.

5. Vorrichtung nach einem der vorhergehenden Ansprüche, dadurch gekennzeichnet, daß diese Meß- und/oder Eingriffsinstrumentenanordnung (2) elektrisch mit der Oberfläche durch das Zusammenwirken der Verbindungsmittel (14, 15) verbunden ist, die wenigstens eine elektrische Kontinuität zwischen einem oder mehreren elektrischen im Kabel (17) enthaltenden Leitern und dem Verbindungskabel (13) sicherstellen.

6. Vorrichtung nach einem der vorhergehenden Ansprüche, dadurch gekennzeichnet, daß diese mit diesem unteren Ende der Kolonne (6) und dieser Anordnung (2) zusammenwirkenden Mittel ein wenigstens seitliches Schutzgehäuse umfassen und daß dieses Schutzgehäuse Öffnungen umfaßt, quer durch welche diese Verankerungsmittel während der gesamten Zeit arbeiten können, die notwendig ist, um von dieser Eingriffsposition in diese Freigabeposition übergehen zu können.

7. Vorrichtung nach Anspruch 6, dadurch gekennzeichnet, daß diese mit dem unteren Ende der Kolonne (6) und dieser Anordnung (2) zusammenwirkenden Mittel ein Drehindexierungssystem dieser Anordnung, bezogen auf dieses Gehäuse, umfassen.

8. Verfahren zur Ausführung der Messungen und-/oder Eingriffsvorgänge in einem stark gegen die Vertikale oder Horizontale geneigten Bohrlochteils, mit Hilfe einer Vorrichtung nach einem der Ansprüche 1 bis 7, angeordnet am Ende einer röhrenförmigen in longitudinaler Kompression steifen Kolonne (6), die folgenden Stufen umfassend:

    – man positioniert diese Anordnung (2) in einer ersten Stellung entsprechend dieser Eingriffsstellung,

    – man führt in das Bohrloch (1) diese Anordnung (2) und diesen unteren Teil dieser Kolonne ein,

    – man läßt diese Anordnung im Bohrloch fortschreiten, bis diese Anordnung im wesentlichen eine gewünschte Position erreicht,

    – man befreit diese Anordnung und gibt sie aus ihrer Eingriffsstellung frei,

    – man führt sie in eine zweite Position unter Abstand von der ersten, in welcher diese Anordnung auf einer Bohrlochwandung ruht und in welcher diese Anordnung mechanisch von der Bohrkolonne abgekoppelt ist,

    – man bewegt oder verschiebt diese Kolonne nach vorne und/oder hinten, derart, daß diese Anordnung die zweite Stellung erreicht und

    – man nimmt die Messungen und/oder Eingriffe vor.

9. Verfahren nach Anspruch 8, dadurch gekennzeichnet, daß man sie in die zweite Position führt, indem man diese Verankerungsmittel derart in Aktion bringt, daß diese Anordnung im Bohrloch (1) gehalten ist.

10. Verfahren nach einem der Ansprüche 8 und 9, dadurch gekennzeichnet, daß es die folgenden unten stehenden Zwischenstufen umfaßt:

    – man führt in die Kolonne (6) einen zu den Verbindungsmitteln (14) komplementären Steckerteil (15), wobei dieser Steckerteil am Ende eines Transmissionskabels (17) fixiert ist,

    – man bewegt den Steckerteil (15) in der Kolonne, bis man seine Verbindung durch die Verbindungsmittel auf dieser Basis erhalten hat, die mit der Anordnung über das Verbindungskabel (13) verbunden ist,

    – man drückt die Verriegelungsmittel (6a, 10a) der Basis in der Kolonne (6) durch Fernsteuerung, ausgehend von der Oberfläche nieder und
– gibt die Anordnung aus ihrer Eingriffsstellung frei.

11. Verfahren nach einem der Ansprüche 8 bis 10, dadurch gekennzeichnet, daß man während der Phase, in der die Anordnung in diese zweite Position gebracht wird, die Position der Anordnung relativ zum Auflager regelt.

12. Verfahren nach Anspruch 10 zur Durchführung von Messungen und/oder Eingriffsvorgängen an verschiedenen Stellen, dadurch gekennzeichnet, daß es die folgenden Stufen umfaßt:
– man führt diesen Steckerteil (15) und dieses Übertragungskabel (17) in die Kolonne quer über ein mit einer seitlichen Öffnung versehenes Verbindungsstrück (3) ein,
– man fixiert dieses Verbindungsstück am oberen Ende der Kolonne (6),
– man läßt die Anordnung in das Bohrloch vorlaufen, indem man röhrenförmige Elemente oberhalb dieses Verbindungsstücks über eine Länge hinzufügt, derart, daß dieses Verbindungsstück in einer vertikalen oder gering geneigten Position des Bohrlochs verbleibt,
– man befreit oder löst diese Anordnung aus ihrer Eingriffsstellung und führt sie dann in eine zweite Stellung, in der diese gegen die Wand des Bohrlochs ruht, wo sie mechanisch von dieser Kolonne abgekoppelt wird,
– man nimmt Messungen und/oder Eingriffsvorgänge vor,
– man bewegt oder verschiebt die Anordnung, indem man die Kolonne anhebt und dann geringfügig die Verrohrung absenkt, um die mechanische Entkopplung sicherzustellen und
– wiederholt so oft wie notwendig die beiden vorhergehenden Stufen.

13. Verfahren nach einem der Ansprüche 8 bis 12, bei dem man diese Kolonne anhebt, dadurch gekennzeichnet, daß man die Funktion dieser Anordnung während des Wiederanhebens der Kolonne auslöst.

14. Verfahren nach einem der Ansprüche 8 bis 13, dadurch gekennzeichnet, daß, wenn einmal die Messungen und/oder Eingriffsvorgänge an einer oder mehreren Stellen vorgenommen worden sind, man diese Anordnung in diese Eingriffsstellung relativ zur Kolonne rückführt.

15. Verfahren zur Ausführung seismischer Profile in einem stark gegenüber der Vertikalen oder Horizontalen geneigten Teil eines Bohrlochs, bei dem man wenigstens eine seismische an der Oberfläche angeordnete Quelle (31) sowie eine Instrumentenanordnung (2) verwendet, die so ausgelegt ist, daß sie seismische Vibrationen mißt, dadurch gekennzeichnet, daß man das Verfahren nach einem der Ansprüche 8 bis 14 in einem Teil des Bohrlochs, während die Quelle sich in Aktion befindet, verwendet.

16. Verfahren nach Anspruch 15, dadurch gekennzeichnet, daß man diese seismische Quelle und diese Anordnung einer Auslegung zur Messung dieser seismischen Vibrationen bewegt oder verschiebt, wobei diese Quelle (31) und diese Anordnung (2) im wesentlichen einander gegenüber angeordnet sind.

**Claims**

1. Device making it possible to carry out measurements and/or works in a part of a well (1) by means of an assembly (2) of measuring and/or operating instruments positioned at the bottom end of a drill string (6), comprising means interacting with the said end and the said assembly, these means including a bearing surface (21), a base (9) able to slide in accordance with a travel defined by a bottom stop (12) and a position in which the said base is locked (6a, 10a) in the casing (6), and a connecting cable (13) between the said base and the said assembly, these means being suitable for holding the said assembly in line with the said end (6) when the said assembly is in an engaged position and suitable for being inoperative when the said assembly is in a disengaged position, the said assembly having means of anchoring (18, 19) to the wall of the well, such as arms, characterised in that the said assembly is in an engaged position when the base (9) is locked in the casing (6), in that in the said engaged position the said bearing surface is suitable for resisting the forces acting on the probe and holding the said assembly in line with the said end, the forces being in the opposite direction to the movement of the drill string in the well and in that the said assembly is suitable for being anchored to the wall of the well in the said engaged position.

2. Device according to claim 1, characterised in that a cable (17) is connected to the said base by means of connection (14, 15) and in that the said assembly is connected to the surface by the interaction of the said cable (17), the said base (9) and the said connecting cable (13).

3. Device according to one of the preceding claims, characterised in that it includes a special connector (3) provided with a side entry through which the said cable (17) connecting the base to the surface passes.

4. Device according to one of the preceding claims, characterised in that the locking means (6a, 10a) can be retracted by remote control from the surface by means of the said cable (17).

5. Device according to one of the preceding claims, characterised in that the said assembly of measuring and/or operating instruments (2) is connected electrically to the surface by the interaction of the connection means (14, 15) providing at least one electrical continuity between one or more electrical conductors contained in the cable (17) and the connecting cable (13).

6. Device according to one of the preceding claims, characterised in that the said means interacting with the said bottom end of the drill string (6) and the said assembly (2) include a protective casing which is at least lateral and in that the said protective casing has openings through which the said anchoring means can operate throughout the time necessary for passing from the said engaged position to the said disengaged position.

7. Device according to claim 6, characterised in that the said means interacting with the said bottom end of the drill string (6) and the said assembly (2) include a system for indexing the said assembly in rotation with respect to the said casing.

8. Method for making measurements and/or carrying out work in a part of a well which is highly slanted with respect to the vertical or is horizontal, using the device according to one of claims 1 to 7, placed at the end of a tubular drill string (6) which is rigid under longitudinal compression, comprising the following steps:
  – the said assembly (2) is positioned in a first position corresponding to the said engaged position,
  – the said assembly (2) and the said lower part of the said drill string are introduced into the well (1),
  – the said assembly is moved forwards in the well until the said assembly reaches substantially a desired position,
  – the said assembly is released and removed from its engaged position,
  – it is brought into a second position away from the first in which the said assembly rests on a wall of the well and in which the said assembly is mechanically decoupled from the said drill string,
  – the said drill string is moved forwards and/or backwards so that the said assembly reaches the said second position, and
  – the measurement and/or work is carried out.

9. Method according to claim 8, characterised in it is brought into the second position whilst the said anchoring means are activated so that the said assembly is held in the well (1).

10. Method according to one of claims 8 and 9, characterised in that it includes the following intermediate and successive steps:
  – a socket (15) complementary to the said means of connection (14) is introduced into the drill string (6), the said socket being fixed to the end of a transmission cable (17),
  – the socket (15) is moved in the drill string until it is connected by the means of connection on the said base connected to the said assembly by the connecting cable (13),
  – the means (6a, 10a) for locking the base in the drill string (6) are retracted by remote control from the surface, and
  – the said assembly is released from its engaged position.

11. Method according to one of claims 8 to 10, characterised in that, during the phase in which the assembly is brought into the said second position, the position of the said assembly relative to the said guide is controlled.

12. Method according to claim 10, for making measurements or carrying out works at several stations, characterised in that it includes the following steps:
  – the said socket (15) and the said transmission cable (17) are introduced into the drill string through a special connector (13) provided with a side entry,
  – this connection is fixed to the upper end of the drill string (6),
  – the assembly is moved forwards in the well by adding tubular elements above the said connector over a length such that the said connector remains in a part of the well which is vertical or has a very small slant,
  – the said assembly is released and removed from its engaged position and then it is brought into a second position in which it rests on the wall of the well where it is mechanically decoupled from the drill string,
  – the measurements and/or works are carried out,
  – the assembly is moved by raising the drill string again and then the casing is lowered again slightly so as to bring about mechanical decoupling, and then
  – the two preceding steps are repeated as often as necessary.

13. Method according to one of claims 8 to 12, in which the drill string is raised again, characterised in that the operation of the said assembly is initiated during the re-raising of the said drill string.

14. Method according to one of claims 8 to 13, characterised in that, once the measurements and/or works have been carried out at one or more stations, the said assembly is brought back into the said engaged position relative to the said drill string.

15. Method for carrying out seismic profiles in a part of a well which is highly slanted with respect to the vertical or is horizontal, in which at least one seismic source (31) placed on the surface and an instrument assembly (2) suitable for measuring seismic vibrations are used, characterised in that the method according to one of claims 8 to 14 is put into practice in the said part of the well whilst the said source is in action.

16. Method according to claim 15, characterised in that the said seismic source and the said assembly suitable for measuring the said seismic vibrations are moved, the said source (31) and the said assembly (2) being placed substantially in line with each other.

FIG.1

FIG.2

FIG.3

FIG.4

EP 0 296 209 B1

FIG.5

EP 0 296 209 B1